# EUROPÄISCHE PATENTSCHRIFT

(11) **EP 1 696 144 B1**
(45) Veröffentlichungstag und Bekanntmachung des Hinweises auf die Patenterteilung: **12.09.2018**
(21) Anmeldenummer: 06000970.1
(22) Anmeldetag: 18.01.2006
(51) Int. Cl.: F16C 33/46, F16C 33/66, F16C 19/26

(54) **Wälzlagerkäfig mit Schmiertaschen und Schmiernuten**
Cage of a rolling element bearing with lubricating pockets and grooves
Cage de palier de roulement muni de poches et rainures de graissage

(30) Priorität: 25.02.2005 DE 102005008668
(43) Veröffentlichungstag der Anmeldung: 30.08.2006
(73) Patentinhaber: AUDI AG, 85045 Ingolstadt (DE)
(72) Erfinder: Wagner, Rupert, 86556 Kühbach (DE)
(74) Vertreter: Lehle, Josef

(56) Entgegenhaltungen:
- DE-A1- 4 207 329
- DE-A1- 19 959 498
- DE-U- 1 842 145
- JP-A- H 102 326
- JP-A- 2001 304 270
- JP-A- 2003 056 576
- US-A- 1 963 407
- US-A- 2 219 031
- US-A- 3 195 965

## Beschreibung

Die Erfindung betrifft einen Wälzlagerkäfig nach dem Oberbegriff des Anspruchs 1.

Bei bestimmten Einsatzfällen von Wälzlagern übernimmt der Wälzlagerkäfig die axiale Führung. Dabei gleiten die Käfigseitenflächen auf den Seiten von der seitlichen Begrenzung dienenden Anlaufflächen. Aus Gründen der Betriebssicherheit und Wirtschaftlichkeit ist es erforderlich, eine möglichst gute Schmierung zwischen den Anlaufflächen und den daran gleitenden Käfigseitenflächen herzustellen.

Dazu besteht ein aus dem Gebrauchsmuster DE 1 715 089 U bekannter Wälzlagerkäfig aus beabstandeten Käfigringen mit Seitenflächen, wobei die Käfigringe zur Ausbildung von Wälzkörpertaschen mit Querstegen verbunden sind. Die radial äußeren Käfigränder und/oder die radial äußeren Querstegflächen bilden Mantelflächen am Käfigumfang. Zur Verbesserung der Schmierung zwischen den Käfigseitenflächen und Anlaufflächen sind in den Käfigseitenflächen mehrere am Umfang verteilte Schmiertaschen eingeformt. Diese Schmiertaschen sind nutenförmig ausgeführt und am Übergang in die Seitenflächen flach auslaufend zu beiden Nutenseiten gleich verrundet. Dadurch soll die Bildung von Schmierkeilen begünstigt werden.

Diese Schmiertaschen sind somit nur für eine Verbesserung der seitlichen Anlaufschmierung vorgesehen. Ein Zusammenwirken mit der ebenfalls erforderlichen Schmierung der Wälzkörper ist nicht erkennbar.

Weiter ist es bekannt, für eine verbesserte Schmierung der Wälzkörper in die Mantelfläche eines Wälzlagerkäfigs, insbesondere in die Außenflächen der Querstege Schmiernuten einzuformen (DE 197 38 331 A1). Aus dem Dokument US 3 195 965 A ist ein gattungsgemäßer Wälzlagerkäfig bekannt. In den Seitenflächen des gezeigten Kugellagerkäfigs sind Schmiertaschen und in der Mantelfläche Schmiernuten angeordnet. Zwischen den Schmiertaschen und den Schmiernuten sind innenliegende, gekrümmte Durchgänge vorgesehen, die Schmiermittel aus den Schmiertaschen in die in Umfangsrichtung verlaufende Schmiernuten umlenken.

Aufgabe der Erfindung ist es, einen gattungsgemäßen Wälzlagerkäfig so weiterzubilden, dass die Schmierung des Wälzlagers insgesamt, insbesondere die Schmierung der Wälzkörper verbessert wird.

Diese Aufgabe wird mit den Merkmalen des Anspruchs 1 gelöst. Erfindungsgemäß ist in die Mantelfläche eine der wenigstens einen Schmiertasche lagezugeordnete, kanalförmige Schmiernut eingeformt und die Schmiertasche und die Schmiernut sind zur Schmiermittelförderung an einer Verbindungsstelle miteinander verbunden.

Die Schmiertasche kann hier in der Art einer sich drehenden Schaufel Schmiermittel beim Durchgang durch ein Schmiermittelreservoir aufnehmen, wobei das Schmiermittel insbesondere durch Zentrifugalkräfte radial nach außen geführt und an einem umgebenden Außenring in die Schmiernut und von dort zu den Wälzkörpern gelenkt wird. Es kann damit vorteilhaft eine Zwangsschmierung über die Schmiertasche in der Käfigseitenfläche, die zugeordnete Schmiernut in der Mantelfläche zu den angrenzenden Wälzkörpern durchgeführt werden, was insgesamt zu einer verbesserten Lagerschmierung führt. Zudem kann gegebenenfalls, wie anhand des Standes der Technik eingangs erläutert, mittels einer oder mehrerer Schmiertaschen eine Schmierung in Axialrichtung gegenüber einer Anlauffläche durchgeführt werden.

Gemäß Anspruch 2 verläuft in einer ersten Ausführungsform die Schmiernut in Käfigquerrichtung und ist als Schmiermittelkanal in die radial äußere Querstegfläche eines der Schmiertasche zugeordneten Querstegs eingeformt. Damit ergibt sich eine einfache konstruktive Ausführung mit guter Schmierfunktion.

Dazu kann nach Anspruch 3 der Schmiermittelkanal rinnenförmig ausgebildet sein und von einem Seitenbereich an der Verbindungsstelle mit der Schmiertasche bis zu einer radial zurückversetzten Stegaussparung verlaufen, wobei dann Schmiermittel vom Schmiermittelkanal über die Stegaussparung unmittelbar auf die Umfangsflächen zu beiden Seiten angeordneter Wälzkörper gelangt.

In einer besonders bevorzugten alternativen zweiten Ausführungsform nach Anspruch 4 ist die Schmiernut in einen radial äußeren Käfigrand eingeformt dergestalt, dass die Schmiernut ausgehend von der axial äußeren Seitenfläche gegenüber der Käfigquerrichtung, entgegen der Lagerdrehrichtung gesehen, schräg nach hinten in eine Wälzkörpertasche zwischen zwei benachbarte Querstege verläuft. Durch diese Schrägstellung der Schmiernut wird ein schneller, umfangreicher Schmiermitteltransport begünstigt. Zudem gelangt Schmiermittel direkt auf einen zugeordneten Wälzkörper, von wo es sich dann im Lager verteilen kann. Erfindungsgemäß weist die Schmiertasche entgegen der Lagerdrehrichtung gesehen eine Schmiertaschen-Einlaufschräge und auf der anderen gegenüberliegenden Seite eine Schmiertaschen-Begrenzungsstufe auf. Damit wird die Schaufel- und Pumpwirkung der Schmiertasche zur Ölförderung in die Schmiernut verbessert, da mit der Schmiertaschen-Begrenzungsstufe eine Schwelle geschaffen ist, an der das Schmiermittel in Folge der Lagerdrehung nach radial außen und an einem Außenring in die Schmiernut gedrängt wird. Die Schmiertaschen-Einlaufschräge begünstigt dabei den Schmiermitteleintritt in die Schmiertasche.

Für eine gute Schaufel- und Pumpfunktion der Anordnung ist es nach Anspruch 5 zweckmäßig, die Schmiertasche breiter als die Schmiernut auszuführen.

Erfindungsgemäß liegt die Verbindungsstelle der Schmiertasche mit der Schmiernut entgegen der Drehrichtung gesehen nach der Schmiertaschen-Einlaufschräge und vor der Schmiertaschen-Begrenzungsstufe an einem geraden Bodenbereich der Schmiertasche, wobei in der Verbindungsstelle die Schmiernut mit einer 90°-Umlenkung von der Radialrichtung in die Axialrichtung am geraden Bodenbereich anschließt.

Nach Anspruch 6 ist zudem bevorzugt die Schmiertasche radial durchgehend in der Seitenfläche des Käfigrings eingeformt.

Nach Anspruch 7 soll die Schmiertaschen-Begrenzungsstufe radial verlaufen. Je nach den Gegebenheiten kann es für eine weitere Verstärkung der Schaufel- und Pumpwirkung zweckmäßig sein, gemäß Anspruch 8 die Schmiertaschen-Begrenzungsstufe gegenüber der Radialrichtung zur Verbindungsstelle der Schmiertasche mit der Schmiernut hin schräg anzustellen.

Je nach Einsatz und den Schmiererfordernissen können nach Anspruch 9 mehrere Schmiertaschen an beiden axial gegenüberliegenden Seitenflächen mit zugeordneten Schmiernuten in Umfangsrichtung versetzt angebracht werden. Zudem können je nach Einsatzfall zusätzlich nicht miteinander gekoppelte Schmiernuten und/oder Schmiertaschen vorgesehen werden.

Die vorstehend beanspruchten Ausführungen mit schräg gestellten Scharniernuten und/oder mit Schmiertaschen, die Einlaufschrägen und Schmiertaschen-Begrenzungsstufen aufweisen, haben die gute Schaufel- und Pumpfunktion nur beim Einbau mit der angegebenen Drehrichtung. Bei einer Verwendung mit entgegengesetzter Drehrichtung wäre somit ein Wälzlagerkäfig in spiegelbildlicher Ausführung erforderlich. Mit Anspruch 10 wird daher ein Wälzlagerkäfig beansprucht, der für den Einbau in beiden Drehrichtungen geeignet ist. Dazu werden jeweils aufeinander folgende Schmiertaschen/Schmiernuten spiegelbildlich zueinander ausgebildet. Damit hat zumindest jede zweite Schmiertasche/Schmiernut die angegebene gute Schaufel- und Pumpfunktion, so dass vorteilhaft nur eine Wälzlagerkäfigausführung für den Einsatz mit beiden Drehrichtungen erforderlich ist.

Anhand einer Zeichnung wird die Erfindung näher erläutert.

Es zeigen:
- **Fig. 1**: eine perspektivische Teilansicht eines Wälzlagerkäfigs mit Wälzkörpern einer ersten Ausführungsform,
- **Fig. 2**: eine Teilseitenansicht des Wälzlagerkäfigs nach **Fig. 1** in Blickrichtung A,
- **Fig. 3**: eine Teildraufsicht im Bereich einer Schmiertasche auf den Wälzlagerkäfig von **Fig. 1** in Blickrichtung B,
- **Fig. 4**: eine perspektivische Teilansicht eines Wälzlagerkäfigs im Bereich einer Schmiertasche und Schmiernut einer zweiten Ausführungsform, und
- **Fig. 5**: eine Teilansicht des Wälzlagerkäfigs nach **Fig. 4** in Blickrichtung C.

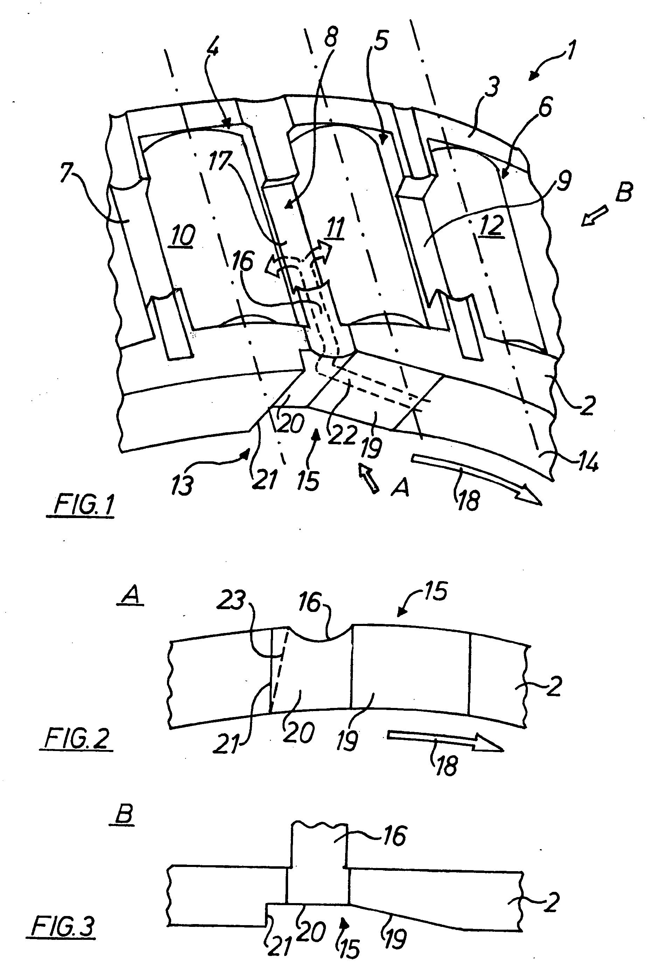

In **Fig. 1** ist ein Teilbereich eines Wälzlagerkäfigs 1 einer ersten Ausführungsform in perspektivischer Ansicht gezeigt. Dieser besteht aus axial beabstandeten Käfigringen 2, 3, welche zur Ausbildung von Wälzkörpertaschen 4, 5, 6 mit Querstegen 7, 8, 9 verbunden sind. In den Wälzkörpertaschen 4, 5, 6 sind Wälzkörper 10, 11, 12 achsparallel gehalten und drehbar angeordnet. Eine Schaufel- und Pumpeinrichtung 13 für Schmiermittel ist hier schematisch und beispielhaft an einer Seitenfläche 14 des Käfigrings 2 dargestellt. Je nach Anwendung und Erfordernissen können mehrere solche Schaufel- und Pumpeinrichtungen 13 am Ringumfang versetzt und/oder auch an der axialen Außenseite des anderen Käfigrings 3 vorgesehen werden.

Die Schaufel- und Pumpeinrichtung 13 besteht einerseits aus einer in die Seitenfläche 14 des Käfigrings 2 eingeformten Schmiertasche 15 und einer Schmiernut 16, die in Käfigquerrichtung verläuft und als rinnenförmig ausgebildeter Schmiermittelkanal in die radial äußere Querstegfläche des der Schmiertasche 15 zugeordneten Querstegs 8 eingeformt ist. Die Schmiertasche 15 und die Schmiernut 16 liegen mit einer 90°-Umlenkung hintereinander und sind zur Schmiermittelförderung strömungsmäßig verbunden.

Die Schmiernut 16 verläuft in Käfigquerrichtung bis zu einer radial zurückversetzten Stegaussparung 17.

Die Schmiertasche 15 weist entgegen der Lagerdrehrichtung 18 gesehen eine Schmiertaschen-Einlaufschräge 19, einen etwa geraden Bodenbereich 20 und eine Schmiertaschen-Begrenzungsstufe 21 auf. Dies ist deutlich aus den **Fig. 2** und **3** zu erkennen.

Die Schmiertasche 15 ist insgesamt breiter als die Schmiernut 16, wobei diese mit einer 90°-Umlenkung von der Radialrichtung in die Axialrichtung am geraden Bodenbereich 20 vor der Schmiertaschen-Begrenzungsstufe 21 anschließt. Die Schmiertasche 15 ist ersichtlich radial durchgehend in der Seitenfläche des Käfigrings 2 eingeformt.

Die Schmiermittelströmung 22, die durch die Schaufel- und Pumpeinrichtung 13 erzeugt wird, ist strichliert eingezeichnet und mit dem Bezugszeichen 22 bezeichnet: Schmiermittel strömt entlang der Schmiertaschen-Einlaufschräge 19 in die Schmiertasche 15 ein und staut sich an der durch die Lagerdrehung in Lagerdrehrichtung 18 nachdrängenden Schmiertaschen-Begrenzungsstufe 21, wodurch eine Zwangsbewegung des Schmiermittels in Radialrichtung zur Schmiernut 16 hin und in diese hinein erfolgt. Dort wird das Schmiermittel in Querrichtung bis zur Stegaussparung 17 geführt, wo es sich zu beiden Seiten zur Schmierung der Wälzkörper 10, 11, 12 verteilt.

Im gezeigten Ausführungsbeispiel nach **Fig. 1** verläuft die Schmiertaschen-Begrenzungsstufe 21 radial. Gegebenenfalls kann für eine Unterstützung der Schaufel- und Pumpwirkung die Schmiertaschen-Begrenzungsstufe 21 gegenüber der Radialrichtung zur Verbindungsstelle der Schmiertasche 15 mit der Schmiernut 16 hin schräg gestellt sein (strichliert mit Bezugszeichen 23 in **Fig. 2** eingezeichnet).

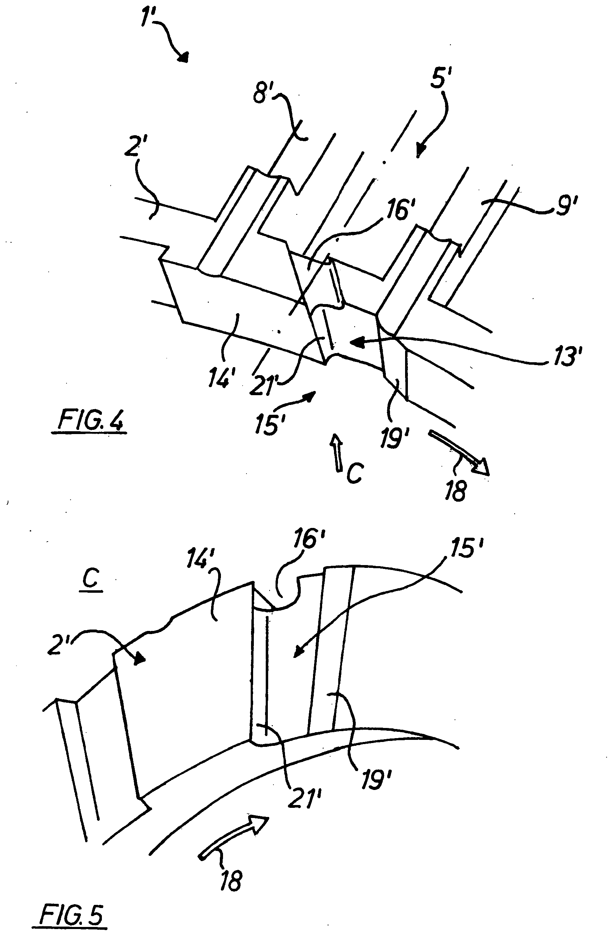

In **Fig. 4** ist ein Teilbereich eines Wälzlagerkäfigs 1' einer zweiten Ausführungsform in perspektivischer Ansicht gezeigt. Der Aufbau ist ähnlich dem Wälzlagerkäfig von **Fig. 1****,** wobei jedoch hier nur ein Käfigring 2', Teile von Querstegen 8', 9' und eine dazwischen liegende Wälzkörpertasche 5' ohne Wälzkörper dargestellt sind. Auch hier ist eine Schaufel- und Pumpeinrichtung 13' für Schmiermittel schematisch und beispielhaft an einer Seitenfläche 14' des Käfigrings 2' gezeigt.

Die Schaufel- und Pumpeinrichtung 13' weist auch hier eine in die Seitenfläche 14' des Käfigrings 2 eingeformte Schmiertasche 15' auf mit, entgegen der Lagerdrehrichtung 18 gesehen einer Schmiertaschen-Einlaufschräge 19' und einer Schmiertaschen-Begrenzungsstufe 21. Dies ist insbesondere aus der Ansicht in Blickrichtung C nach **Fig. 5** zu erkennen. Die Schmiertasche 15' ist breiter als die Schmiernut 16', wobei diese unmittelbar vor der Schmiertaschen-Begrenzungsstufe 21' anschließt. Zudem ist die Schmiernut 16' hier im Gegensatz zur ersten Ausführungsform in einen radial äußeren Käfigrand eingeformt und verläuft ausgehend von der axial äußeren Seitenfläche 14' gegenüber der Käfigquerachse, entgegen der Lagerdrehrichtung 18 gesehen, schräg nach hinten und führt in die Wälzkörpertasche 5' zwischen die zwei benachbarten Querstege 8', 9'. Damit mündet die Schmiernut 16' unmittelbar in den Bereich eines (hier nicht dargestellten) Wälzkörpers.

Die Funktion der Schaufel- und Pumpeinrichtung 13' ist hier ähnlich der in Verbindung mit der ersten Ausführungsform beschriebenen Funktion, wobei die Schrägstellung der Schmiernut 16' die Förderung des Schmiermittels zusätzlich begünstigt und dieses unmittelbar auf einen zugeordneten Wälzkörper gelangt.

## Patentansprüche

1. Wälzlagerkäfig, bestehend aus axial beabstandeten Käfigringen (2, 3; 2', 3') mit Seitenflächen (14), wobei die Käfigringe (2, 3; 2') zur Ausbildung von Wälzkörpertaschen (4, 5, 6; 4', 5', 6') mit Querstegen (7, 8, 9; 8', 9') verbunden sind und die radial äußeren Käfigringränder und/oder die radial äußeren Querstegflächen Mantelflächen am Käfigumfang bilden, mit wenigstens einer in eine Seitenfläche (14; 14') eingeformten Schmiertasche (15; 15'), wobei in die Mantelfläche eine der Schmiertasche (15; 15') lagezugeordnete kanalförmige Schmiernut (16; 16') eingeformt ist, wobei die Schmiertasche (15; 15') entgegen der Lagerdrehrichtung (18) gesehen eine Schmiertaschen-Einlaufschräge (19; 19') und auf der anderen gegenüberliegenden Seite eine Schmiertaschen-Begrenzungsstufe (21; 21'; 23) aufweist und die Schmiertasche (15; 15') und die Schmiernut (16; 16') zur Schmiermittelförderung an einer Verbindungsstelle miteinander verbunden sind, **dadurch gekennzeichnet, dass** die Verbindungsstelle der Schmiertasche (15; 15') mit der Schmiernut (16; 16') entgegen der Lagerdrehrichtung gesehen nach der Schmiertaschen-Einlaufschräge (19; 19') vor der Schmiertaschen-Begrenzungsstufe (21; 21'; 23) an einem geraden Bodenbereich (20) der Schmiertasche (15; 15') liegt, und dass in der Verbindungsstelle die Schmiernut (16; 16') mit einer 90°-Umlenkung von der Radialrichtung in die Axialrichtung am geraden Bodenbereich (20) der Schmiertasche (15, 15') anschließt.

2. Wälzlagerkäfig nach Anspruch 1, **dadurch gekennzeichnet, dass** die Schmiernut (16) in Käfigquerrichtung verläuft und als Schmiermittelkanal in die radial äußere Querstegfläche eines der Schmiertasche (15) zugeordneten Querstegs (8) eingeformt ist.

3. Wälzlagerkäfig nach Anspruch 2, **dadurch gekennzeichnet, dass** die Schmiernut (16) rinnenförmig ausgebildet ist und von einem Seitenbereich an der Verbindungsstelle mit der Schmiertasche (15) bis zu einer radial zurückversetzten Stegaussparung (17) verläuft.

4. Wälzlagerkäfig nach Anspruch 1, **dadurch gekennzeichnet, dass** die Schmiernut (16') in einen radial äußeren Käfigrand eingeformt ist, und **dass** die Schmiernut (16') ausgehend von der axial äußeren Seitenfläche (14') gegenüber der Käfigquerrichtung, entgegen der Lagerdrehrichtung (18) gesehen, schräg nach hinten in eine Wälzkörpertasche (5') zwischen zwei benachbarte Querstege (8', 9') verläuft.

5. Wälzlagerkäfig nach einem der Ansprüche 1 bis 4, **dadurch gekennzeichnet, dass** die Schmiertasche (15; 15') breiter als die Schmiernut (16; 16') ist.

6. Wälzlagerkäfig nach einem der Ansprüche 1 bis 5, **dadurch gekennzeichnet, dass** die Schmiertasche (15; 15') radial durchgehend in der Seitenfläche (14; 14') des Käfigrings (2; 2') eingeformt ist.

7. Wälzlagerkäfig nach einem der Ansprüche 1 bis 6, **dadurch gekennzeichnet, dass** die Schmiertaschen-Begrenzungsstufe (21; 21') radial verläuft.

8. Wälzlagerkäfig nach einem der vorhergehenden Ansprüche, **dadurch gekennzeichnet, dass** die Schmiertaschen-Begrenzungsstufe (23) gegenüber der Radialrichtung zur Verbindungsstelle der Schmiertasche (15) mit der Schmiernut (16) hin schräg gestellt ist.

9. Wälzlagerkäfig nach einem der Ansprüche 1 bis 8, **dadurch gekennzeichnet, dass** mehrere Schmiertaschen (15; 15') an beiden axial gegenüberliegenden Seitenflächen mit zugeordneten Schmiernuten (16; 16') in Umfangsrichtung versetzt angebracht sind.

10. Wälzlagerkäfig nach Anspruch 9, **dadurch gekennzeichnet, dass** bei schräg gestellten Schmiernuten (16') die Schrägstellung sowie die zugeordnete Ausbildung der Schmiertaschen (15') bei aufeinanderfolgenden Schmiernuten (16') wechselweise links und rechts bezüglich der Käfigquerrichtung ausgeführt sind.

## Claims

1. Cage of a rolling element bearing consisting of axially spaced cage rings (2, 3; 2', 3') with side surfaces (14), wherein the cage rings (2, 3; 2') for the formation of rolling element pockets (4, 5, 6; 4', 5', 6') are connected with cross-members (7, 8, 9; 8', 9') and the radially external cage ring edges and/or the radially external cross-member surfaces form jacket surfaces at the cage periphery, with at least one lubricating pocket (15; 15') formed in a side surface (14; 14'), wherein in the jacket surface is formed a channel-shaped lubricating groove (16; 16') positionally associated with the lubricating pocket (15; 15'), wherein the lubricating pocket (15; 15') viewed against the bearing rotational direction (18) has a lubricating pocket inlet bevel (19; 19') and on the other opposite side a lubricating pocket limiting ridge (21; 21'; 23) and the lubricating pocket (15; 15') and the lubricating groove (16; 16') for the transport of lubricating means are connected at a connecting point with one another, **characterised in that** the connecting point of the lubricating pocket (15; 15') and the lubricating groove (16; 16') viewed against the bearing rotational direction lies after the lubricating pocket inlet bevel (19; 19') prior to the lubricating pocket limiting ridge (21; 21'; 23) at a straight floor area (20) of the lubricating pocket (15; 15'), and that in the connecting point the lubricating group (16; 16') abuts on the straight floor area (20) of the lubricating pocket (15, 15') with a 90 ° deviation from the radial direction into the axial direction.

2. Cage of a rolling element according to claim 1, **characterised in that** the lubricating groove (16) extends in the cage transverse direction and is formed as lubrication channel into the radially external cross-member surface of one of the cross-members (8) associated with the lubricating pocket (15).

3. Cage of a rolling element according to claim 2, **characterised in that** the lubricating groove (16) is formed channel-shaped and extends from a side region at the connecting point with the lubricating pocket (15) up to a radially recessed ridge recess (17).

4. Cage of a rolling element according to claim 1, **characterised in that** the lubricating groove (16') is formed in a radially external cage edge, and **that** the lubricating groove (16') starting from the axially external side surface (14') opposite the cage transverse direction, viewed against the bearing rotational direction (18), extends at an angle to the back into a rolling element pocket (5') between two adjacent cross-members (8', 9').

5. Cage of a rolling element according to one of claims 1 to 4, **characterised in that** the lubricating pocket (15; 15') is broader than the lubricating groove (16; 16').

6. Cage of a rolling element according to one of claims 1 to 5, **characterised in that** the lubricating pocket (15; 15') is formed radially continuously in the side surface (14; 14') of the cage ring (2; 2').

7. Cage of a rolling element according to one of claims 1 to 6, **characterised in that** the lubricating pocket limiting ridge (21; 21') extends radially.

8. Cage of a rolling element according to one of the preceding claims, **characterised in that** the lubricating pocket limiting ridge (23) with respect to the radial direction is positioned at an angle to the connecting point of the lubricating pocket (15) with the lubricating groove (16).

9. Cage of a rolling element according to one of claims 1 to 8, **characterised in that** a plurality of lubricating pockets (15; 15') is mounted offset at both axially opposite side surfaces with associated lubricating grooves (16; 16') in circumferential direction.

10. Cage of a rolling element according to claim 9, **characterised in that** in the case of lubricating grooves (16') set at an angle, the angled positioning and the associated formation of the lubricating pockets (15') in the case of consecutive lubricating grooves (16') are carried out in turn to the left and to the right with respect to the cage transverse direction.

## Revendications

1. Cage de palier à roulement, constituée d'anneaux de cage (2, 3 ; 2', 3') distants de façon axiale et présentant des surfaces latérales (14), dans laquelle les anneaux de cage (2, 3 ; 2') sont reliés à des traverses transversales (7, 8, 9 ; 8', 9') dans le but de former des poches de corps de roulement (4, 5, 6 ; 4', 5', 6') et les bords d'anneau de cage de façon radiale extérieurs et/ou les surfaces de traverse transversale de façon radiale extérieures forment des surfaces enveloppantes au niveau de la périphérie de cage, avec au moins une poche de graissage (15 ; 15') formée dans une surface latérale (14 ; 14'), dans laquelle une rainure de graissage (16 ; 16') en forme de canal et associée en position à la poche de graissage (15 ; 15') est formée dans la surface enveloppante, dans laquelle la poche de graissage (15 ; 15') comporte, vu à l'inverse du sens de rotation de palier (18), un biseau d'entrée de poche de graissage (19 ; 19') et, sur l'autre côté opposé, un gradin de limitation de poche de graissage (21; 21'; 23) et la poche de graissage (15 ; 15') et la rainure de graissage (16 ; 16') sont reliées entre elles au niveau d'un point de liaison dans le but de transporter l'agent de graissage, **caractérisée en ce que** le point de liaison de la poche de graissage (15 ; 15') avec la rainure de graissage (16 ; 16') se trouve, vu à l'inverse du sens de rotation de palier, après le biseau d'entrée de poche de graissage (19 ; 19') et avant le gradin de limitation de poche de graissage (21; 21'; 23) au niveau d'une zone de fond droite (20) de la poche de graissage (15 ; 15'), et **en ce que**, dans le point de liaison, la rainure de graissage (16 ; 16') fait suite dans la direction axiale, avec une déviation de 90° par rapport à la direction radiale, à la zone de fond droite (20) de la poche de graissage (15 ; 15').

2. Cage de palier à roulement selon la revendication 1, **caractérisée en ce que** la rainure de graissage (16) s'étend dans la direction transversale de cage et est formée comme canal d'agent de graissage dans la surface de traverse transversale de façon radiale extérieure d'une traverse transversale (8) associée à la poche de graissage (15).

3. Cage de palier à roulement selon la revendication 2, **caractérisée en ce que** la rainure de graissage (16) est réalisée en forme de goulotte et s'étend d'une zone latérale au niveau du point de liaison avec la poche de graissage (15) jusqu'à un évidement de traverse (17) décalé de façon radiale en arrière.

4. Cage de palier à roulement selon la revendication 1, **caractérisée en ce que** la rainure de graissage (16') est formée dans un bord de cage de façon radiale extérieur et **en ce que** la rainure de graissage (16') s'étend à partir de la surface latérale de façon axiale extérieure (14') par rapport à la direction transversale de cage, vue à l'inverse du sens de rotation de palier (18), obliquement vers l'arrière jusque dans une poche de corps de roulement (5') entre deux traverses transversales (8', 9') voisines.

5. Cage de palier à roulement selon l'une quelconque des revendications 1 à 4, **caractérisée en ce que** la poche de graissage (15 ; 15') est plus large que la rainure de graissage (16 ; 16').

6. Cage de palier à roulement selon l'une quelconque des revendications 1 à 5, **caractérisée en ce que** la poche de graissage (15 ; 15') est formée de manière de façon radiale continue dans la surface latérale (14 ; 14') de l'anneau de cage (2 ; 2').

7. Cage de palier à roulement selon l'une quelconque des revendications 1 à 6, **caractérisée en ce que** le gradin de limitation de poche de graissage (21 ; 21') s'étend de façon radiale.

8. Cage de palier à roulement selon l'une quelconque des revendications précédentes, **caractérisée en ce que** le gradin de limitation de poche de graissage (23) est positionné obliquement par rapport à la direction radiale en direction du point de liaison de la poche de graissage (15) avec la rainure de graissage (16).

9. Cage de palier à roulement selon l'une quelconque des revendications 1 à 8, **caractérisée en ce que** plusieurs poches de graissage (15 ; 15') sont agencées, décalées dans la direction périphérique, au niveau des deux surfaces latérales de façon axiale opposées avec des rainures de graissage (16 ; 16') associées.

10. Cage de palier à roulement selon la revendication 9, **caractérisée en ce que,** dans le cas de rainures de graissage (16') positionnées obliquement, la position oblique ainsi que la formation associée des poches de graissage (15') sont réalisées, dans le cas de rainures de graissage (16') successives, alternativement à gauche et à droite par rapport à la direction transversale de cage.
